# EUROPÄISCHE PATENTSCHRIFT

(11) **EP 1 372 957 B1**
(45) Veröffentlichungstag und Bekanntmachung des Hinweises auf die Patenterteilung: **18.10.2006**
(21) Anmeldenummer: 02732478.9
(22) Anmeldetag: 13.03.2002
(51) Int. Cl.: B32B 27/18, B32B 27/32

(54) **BEDRUCKBARE POLYPROPYLENFOLIE MIT ANTIBESCHLAGEIGENSCHAFTEN**
PRINTABLE POLYPROPYLENE FILM HAVING ANTI-FOG PROPERTIES
FEUILLE DE POLYPROPYLENE IMPRIMABLE AYANT DES PROPRIETES D'ANTI-CONDENSATION

(30) Priorität: 16.03.2001 DE 10113281
(43) Veröffentlichungstag der Anmeldung: 02.01.2004
(73) Patentinhaber: Treofan Germany GmbH & Co.KG, 66539 Neunkirchen (DE)
(72) Erfinder: HOLZER, Susanne, 66564 Ottweiler (DE); WIENERS, Gerhard, 60320 Frankfurt (DE)
(86) Internationale Anmeldenummer: PCT/EP2002/002758
(87) Internationale Veröffentlichungsnummer: WO 2002/074535

(56) Entgegenhaltungen:
- EP-A- 0 578 192
- EP-A- 0 701 898
- EP-A- 0 860 272
- EP-A- 0 867 277
- WO-A-97/22655
- US-A- 4 876 146
- US-A- 5 303 327

## Beschreibung

Die Erfindung betrifft eine biaxial orientierte Polypropylen-Mehrschichtfolie, welche mindestens eine Basisschicht B, eine Zwischenschicht Z und eine Deckschicht D umfasst und welche ein oder mehrere Antifog-Additive enthält.

Im Stand der Technik sind Folien mit besonderen Antifog-Eigenschaften bekannt. Antifog-Eigenschaften sind eine wichtige Voraussetzung bei Folienverpackungen für leicht verderbliche Lebensmittel mit hohem Feuchtigkeitsgehalt, wie Salat, frisches Obst, z.B. Beerenfrüchte und Gemüse. Diese werden beispielsweise direkt in Folienbeutel als Einschlagsverpackung oder in Schalen verpackt, die mit einer transparenten Folie abgedeckt oder eingeschlagen werden. Eine Folie, die hierfür geeignet ist muß eine gute Transparenz aufweisen und die Kondensation der Feuchtigkeit in Form von Tropfen auf der Folienoberfläche unterbinden.

Bei Folien, die keine oder mangelhafte Antifog-Eigenschaft haben, führt der Feuchtegehalt der verpackten Lebensmittel zu einer Bildung von Wassertropfen durch Kondensation auf der Folienoberfläche. Diese Tropfenbildung beeinträchtigt zum einen die Transparenz und zum anderen die Haltbarkeit des Packgutes. Die Tropfen haften nicht unbegrenzt auf der Folienoberfläche und die heruntertropfende Feuchtigkeit verursacht eine Beschleunigung der Fäulnis- und Schimmelbildung auf dem Lebensmittel. Darüber hinaus wirken die Tropfen auf der Folienoberfläche bei Lichteinfall wie eine Brennlinse. Folien mit Antifog-Eigenschaften verhindern diese schädigende Wirkung der tropfenförmigen Wasserdampfkondensation.

Die Antifogeigenschaften der Folie können durch Beschichten der Folie mit einer Antifog-Lösung erzielt werden. Alternativ ist die Einarbeitung von Antifog-Additive in die Folie selbst bekannt. Antifogadditive sind allgemein bivalente Verbindungen, die einen unpolaren aliphatischen Bereich zur Verankerung in der Polyolefinmatrix und einen polaren hydrophilen Bereich haben, der mit Wasser wechselwirken kann. Dieser polare Bereich bewirkt die Unverträglichkeit von Antifog-Additiven mit Polyolefin, wodurch die Migration der Additve an die Folienoberfläche gefördert wird.

Dabei ist der polare Bereich nach außen gerichtet und kann so mit Wasser wechselwirken. Das Antifog-Additv senkt den Kontaktwinkel und bewirkt die Ausbildung eines einheitlichen transparenten Wasserfilms auf der Folienoberfläche und verhindert so die unerwünschte Tropfenbildung.

Diese gewünschte Wirkung läßt sich an Polyethylenfolien gut und zuverlässig erzielen. Hingegen erweist es sich als wesentlich schwieriger Polypropylenfolien mit guten Antifogeigenschaften herzustellen, Aus ungeklärten Gründen scheint das Migrationsverhalten der Antifog-Additive in Polyethylen anders zu sein als bei Polypropylen.

EP 0 860 272 beschreibt eine mehrschichtige Folie aus Ethylen Copolymeren, Die äußere Schicht der Folie ist aus Ethylen-Polymeren aufgebaut und enthält Antifog-Mittel. Die innere Schicht ist aus Polyethylen, Polypropylen oder Blockcopolymeren aufgebaut. Diese innere Schicht enthält kein Antifog-Mittel. Es ist angegeben, daß beiden äußeren Schichten der Folie das Antifog-Mittel zugesetzt wird. Es wird erläutert aus welchen Polymeren die Schichten der Folie aufgebaut sind. EP 0 860 272 beschreibt keine Zwischenschicht mit Antifog-Mittel.

EP 0 867 277 beschreibt ein Polypropylen Sheet Material, welches für Tiefziehen geeignet ist. Dieses Sheet ist mit einem Antifog-Mittel versehen. Nach dieser Lehre wird das Antifog-Mittel nicht in eine Schicht des Sheets eingearbeitet. Das Antifog-Mittel wird als Beschichtung auf eine äußere Oberfläche des Sheets aufgebracht. EP 0 867 277 beschreibt nicht die Einarbeitung eines Antifog-Mittels in eine Zwischenschicht einer Folie.

US 5,302,327 bescheibt eine thermoplastische Folie mit Antifogging Eigenschaften. Die Anti-fogging Mittel sind Polyglycerinester oder Fettsäuresorbitanester. Diese Komponenten werden als Beschichtung auf die Oberfläche der Folie aufgebracht. Eine Folie mit Zwischenschichten ist nicht beschrieben.

US 4,876,146 beschreibt eine dreischichtige Folien, die Antifog-Mittel in der Deckschicht enthalten. Die Deckschicht dieser Folie besteht aus olefinischen Polymeren. Die Basisschicht ist eine Mischung aus olefinischen Polymeren und einem Vinylacetat-, Acrylsäure- oder Styrol-Copolymeren. Es ist beschrieben das Antifiog-Mittel der Deckschicht zu zusetzen. Es ist auch beschrieben, daß das Antifog-Mittel der Basisschicht zugesetzt werden kann. In diesem Fall wird eine Konzentration in der Basisschicht von 0,3 - 3 Gew.-% empfohlen. Eine Folie mit Zwischenschichten ist nicht beschrieben

EP 0 701 898 beschreibt eine mehrschichtige Folie mit Polypropylen Deckschichten und einer Polyamid Basisschicht. Zwischen diesen Schicht können Haftvermittlerschichten liegen. Nach dieser Lehre wird das Antifog-Mittel der oder den Deckschichten zugesetzt. Haftvermitter-Zwischenschichten sind im Einzelnen beschrieben. Es wird nicht erwähnt diesen "Zwischenschichten" Antifog-Mittel zu zusetzten.

WO 97/22655 beschreibt mehrschichtige Folien mit einer Zwischenschicht. Die Folien weisen eine gute Bedruckbarkeit, gute antistatischen Eigenschaften und gute Antifog Eigenschaften auf. Die Deckschichten enthalten eine Mischung aus zwei verschiedenen Polymeren und funktionell Additive, wie beispielsweise Antifog-Mittel. Das zweite Polymere ist ein säuremvdifiziertes Polymer oder ein lonomer und stellt sicher, daß trotz der Additive in der Deckschicht eine gute Bedruckbarkeit gegeben ist. Die zusätzliche Zwischenschicht ist eine Schicht mit Barriere gegenüber Sauerstoff und aus PVC, EVOH, PA oder PET aufgebaut. Es ist nicht beschrieben dieser Zwischenschicht Antifog-Mittel zu zusetzten.

EP 0739398B1 beschreibt eine Folie mit Antifogeigenschaften, Diese werden durch eine Kombination aus drei verschiedenen Additiven In mindestens einer äußeren Schicht erzielt . Die Folie enthält 1 bis 5 Gew,-% dieser Dreierkombination.

In WO 97/13840 wird eine mehrschichtige Folie beschrieben, die ein Antifog-Additiv in einer der äußeren Schichten enthält. Diese antifoghaltige Deckschicht ist aus Polyethylen aufgebaut. Die Folie ist bevorzugt dreischichtig.

Die im Stand der Technik bekannten Antifog-Folien aus Polypropylen sind nachteilig hinsichtlich der Bedruckbarkeit und/oder Transparenz oder der Hot-Tack-Eigenschaften der Folie. Des weiteren sind die bekannten Folien verbesservngsbedürftig bezüglich der Antifog-Eigenschaften, insbesondere auch im Hinblick auf die Langzeitbeständigkeit dieser Eigenschaften.

Die Aufgabe der vorliegenden Erfindung bestand darin, eine Folie mit guten und langzeitbeständigen Antifogeigenschaften zur Verfügung zu stellen. Gleichzeitig soll die Folie sehr gute optische Eigenschaften, d.h. hohe Transparenz und guten Glanz, sowie Siegeleigenschaften, insbesondere einen guten Hot-Tack aufweisen- Ebenso ist gefordert, daß die Folie auf mindestens einer Seite, möglichst der äußeren Seite, bedruckbar ist.

Diese Aufgabe wird erfindungsgemäss gelöst durch eine biaxial orientierte Polypropylen-Mehrschichtfolie, welche mindestens eine Basisschicht B, eine Zwischenschicht I und eine Deckschicht I umfasst und welche Antifog Additive enthält, wobei die Antifog-Additive nur der Zwischenschicht I in einer Menge von 0,5 bis 8 Gew.-%, bezogen auf das Gewicht der Zwischenschicht zugefügt wird und die Folie maximal 0,5 bis < 1 Gew.-% Antifog-Additive, bezogen auf das Gesamtgewicht der Folie, enthält und wobei die Basisschicht mindestens 90Gew.-% eines Propylenpolymeren enthält und die Zwischenschicht I 92 - 99,5 Gew.-% Propylencopolymer und/oder Propylenterpolymer enthält

Erfindungsgemäss umfasst die Folie mindestens drei Schichten und besteht aus einer Basisschicht B und einer innere Zwischenschicht Z und einer auf der inneren Zwischenschicht aufgebrachten Deckschicht D gemäss einem Schichtaufbau BZD.

Die Basisschicht ist im Sinne der vorliegenden Erfindung diejenige Schicht, welche die grösste Schichtdicke aufweist und mindestens 40 %, vorzugsweise 50 bis 90 %, der Gesamtfoliendicke ausmacht. Deckschichten sind diejenigen Schichten, welche die aussenliegenden Schichten bilden. Zwischenschichten sind naturgemäss zwischen anderen vorhandenen Schichten, im allgemeinen zwischen der Basisschicht und einer Deckschicht, angebracht. Die innere Zwischenschicht ist auf der Seite der Folie angebracht, welche dem verpackten Gut später zugewandt ist.

In einer weiteren Ausführungsform besteht die Folie aus einer Basisschicht B, beidseitig darauf aufgebrachten Zwischenschichten Z und auf den Zwischenschichten aufgebrachten Deckschichten D, d. h. einem fünfschichtigen Aufbau DZBZD. In einer weiteren bevorzugten Ausführungsform besteht die Folie aus einer Basisschicht B, einer einseitig darauf aufgebrachten Zwischenschicht Z und auf der Basis- und der Zwischenschicht aufgebrachten Deckschichten D gemäss DBZD. Gegebenenfalls können diese Grundaufbauten aus drei, vier oder fünf Schichten weitere Zwischenschichten enthalten. Dabei können die Zwischenschichten Z und die Deckschichten D aus voneinander verschiedenen Rohstoffen aufgebaut sein.

Die Basisschicht der Folie enthält im allgemeinen mindestens 90 Gew.-%, vorzugsweise 95 bis 100 Gew.-%, insbesondere 98 bis <100 Gew.-%, jeweils bezogen auf die Basisschicht, eines nachstehend beschriebenen Propylenpolymeren. Dieser Basisschicht wird kein Antifog Additiv zugefügt.

Es wurde gefunden, daß eine Basisschicht aus Polypropylen ohne Zusatz von Antifog-Additiv vorteilhaft zu dem gewünschte Eigenschaftsprofil der Folie beiträgt. Überraschenderweise wurde festgestellt, daß die Antifogadditive aus der Zwischenschicht I nur zu der ersten inneren Oberfläche der Folie migrieren und die Basisschicht gegenüber dem Antifog-Additiv als effektive Migrationssperre wirkt. Diese Sperrwirkung ist so ausgeprägt, daß die zweite äußere Deckschicht zwecks Verbesserung der Bedruckbarkeit mittels Corona oder Flamme behandelt werden kann. Trotz dieser Behandlung kommt die migrationsfördernde Wirkung dieser Corona- oder Flammbehandlung, nicht zum Tragen. Es wurde erwartete, daß eine beidseitige Coronabehandlung der Folie zu einer Migration des Antifog-Additivs zu beiden Oberflächen der Folie führen würde. Dies war insbesondere bei den vergleichsweise hohe Konzentrationen an Antifog-Additiv in der Zwischenschicht zu erwarten. Es ist im Stand der Technik von vergleichbaren Folienrezepturen grundsätzlich bekannt, daß durch eine "leere" Basisschicht die gezielte Migration von migrierenden Additiven zu einer Folienoberfläche gefördert werden kann. Dies ist aber bisher nur für Rezepturen beschrieben, bei denen der Gesamtgehalt an migrierenden Additiven sehr klein gehalten wird. Derartig geringe Mengen an Antifog-Additiven zeigten jedoch nicht die gewünschte Wirkung.

Das Propylenpolymer der Basisschicht enthält mindestens >98 bis 100 Gew.-% Propylen. Der entsprechende Comonomergehalt von 0 bis höchstens 2 Gew.-% bezogen auf das Propylen besteht, wenn vorhanden, im allgemeinen aus Ethylen.. lsotaktisches Propylenhomopolymer ist bevorzugt.

Das Propylenhomopolymere hat im allgemeinen einen Schmelzpunkt von 140 bis 170 °C, vorzugsweise von 150 bis 165 °C, und im allgemeinen einen Schmelzflussindex (Messung DIN 53 735 bei 21,6 N Belastung und 230 °C) von 1,5 bis 20 g/10 min, vorzugsweise von 2 bis 15 g/10 min. Der n-heptanlösliche Anteil des isotaktischen Polymeren beträgt im allgemeinen 1 bis 6 Gew.-%, bezogen auf das Polymere. Gegebenenfalls kann das Propylenpolymere der Basisschicht peroxidisch abgebaut.

Im allgemeinen enthält die Basisschicht übliche Stabilisatoren und Neutralisationsmittel in jeweils wirksamen Mengen, sowie gegebenenfalls Gleitmittel und/oder Antistatika. Alle nachstehenden Angaben in Gew.-% beziehen sich auf das Gewicht der Basisschicht.

Als Stabilisatoren können die üblichen stabilisierend wirkenden Verbindungen für Ethylen-, Propylen- und andere alpha -Olefinpolymere eingesetzt werden. Deren Zusatzmenge liegt zwischen 0,05 und 2 Gew.-%. Besonders geeignet sind phenolische Stabilisatoren, Alkali-/Erdalkalistearate und/oder Alkali/Erdalkalicarbonate. Phenolische Stabilisatoren werden in einer Menge von 0,1 bis 0,6 Gew.-%, insbesondere 0,15 bis 0,3 Gew.-%, und mit einer Molmasse von mehr als 500 g/mol bevorzugt. Pentaerythrityl-Tetrakis-3-(3,5-di-Tertiärbutyl-4-Hydroxyphenyl)-Propionat oder 1,3,5-Trimethyl-2,4,6-tris(3,5-di- T ertiärbutyl-4-Hydroxybenzyl)benzol sind besonders vorteilhaft.

Neutralisationsmittel sind vorzugsweise Dihydrotalcit, Calciumstearat und/oder Calciumcarbonat einer mittleren Teilchengrösse von höchstens 0,7 µm, einer absoluten Teilchengrösse von kleiner 10 µm und einer spezifischen Oberfläche von mindestens 40 m/g.

Geeignete Gleitmittel für die erfindungsgemäße Antifogfolie sind höhere aliphatische Säureamide aus einem Amin und einer wasserunlöslichen Monocarbonsäure (sogenannte Fettsäuren) mit 8 bis 24 Kohlenstoffatomen, vorzugsweise 10 bis 18 Kohlenstoffatomen. Erucasäureamid, Stearinsäureamid und Ölsäureamid sind bevorzugt. Gleitmittel werden üblicherweise in einer Menge von 0,1 bis 0,3 Gew.-% bezogen auf die Basisschicht zugesetzt.

Bevorzugte Antistatika sind die im wesentlichen geradkettigen und gesättigten aliphatischen, tertiären Amine mit einem aliphatischen Rest mit 10 bis 20 Kohlenstoffatomen, die mit Hydroxy-(C1-C4)-alkyl-Gruppen substituiert sind, wobei N,N-bis-(2-hydroxyethyl)-alkylamine mit 10 bis 20 Kohlenstoffatomen, vorzugsweise 12 bis 18 Kohlenstoffatomen, im Alkylrest besonders geeignet sind. Weiterhin sind als Antistatika Monoester aus Glycerin und aliphatischen Fettsäuren geeignet, wobei Fettsäurereste mit 10 bis 20 Kohlenstoffatomen bevorzugt sind. Insbesondere ist Glycerinmonostearat bevorzugt. Antistatika werden üblicherweise in einer Menge von 0,1 bis 0,3 Gew.-% zugesetzt. Im allgemeinen wird der Zusatz von Antistatika nicht erforderlich sein.

Die erfindungsgemässe Polypropylenfolie umfasst weiterhin eine auf der Basisschicht aufgebrachte erste innere Zwischenschicht I sowie gegebenenfalls eine zweite Zwischenschicht II, welche auf der gegenüberliegenden Seite der Basisschicht angebracht ist. Die innere Zwischenschicht I ist aufgebaut aus Polymeren aus Olefinen mit 2 bis 10 Kohlenstoffatomen, vorzugsweise Propylenco- und/oder Terpolymere deren Propylengehalt 70 - 98 Gew.-%, vorzugsweise 90 bis <98 Gew.-%, bezogen auf das Propylen, beträgt. Im allgemeinen enthält die Zwischenschicht I 92 - 99,5 Gew.-%, vorzugsweise 95 - 99 Gew.-% dieser Propylenpolymeren.

Beispiele für derartige olefinische Polymere sind
ein Copolymer von
Ethylen und Propylen oder
Ethylen und Butylen-1 oder
Propylen und Butylen-1 oder
ein Terpolymer von
Ethylen und Propylen und Butylen-1 oder
ein Blend oder eine Mischung aus zwei oder mehreren der genannten Homo-, Co- und Terpolymeren,
wobei insbesondere statistische Ethylen-Propylen-Copolymere mit einem Ethylengehalt von 1 bis 10 Gew.-%, bevorzugt 2,5 bis 8 Gew.-%, oder statistische Propylen-Butylen-1-Copolymere mit einem Butylengehalt von 2 bis 25 Gew.-%, bevorzugt 4 bis 20 Gew.-%, jeweils bezogen auf das Gesamtgewicht des Copolymeren, oder
statistische Ethylen-Propylen-Butylen-1-Terpolymere mit einem Ethylengehalt von 1 bis 10 Gew.-%, bevorzugt 2 bis 6 Gew.-%, und einem Butylen-1-Gehalt von 2 bis 20 Gew.-%, bevorzugt 4 bis 20 Gew.-%, jeweils bezogen auf das Gesamtgewicht des Terpolymeren, oder
ein Blend aus einem Ethylen-Propylen-Butylen-1-Terpolymeren- und einem Propylen-Butylen-1-Copolymeren mit einem Ethylengehalt von 0,1 bis 7 Gew.-% und einem Propylengehalt von 50 bis 90 Gew.-% und einem Butylen-1-Gehalt von 10 bis 40 Gew.-%, jeweils bezogen auf das Gesamtgewicht des Polymerblends, bevorzugt sind.

Die in der inneren Zwischenschicht I eingesetzten vorstehend beschriebenen Co- und Terpolymeren weisen im allgemeinen einen Schmelzflussindex von 1,5 bis 30 g/10 min, vorzugsweise von 3 bis 15 g/10 min, auf. Der Schmelzpunkt liegt vorzugsweise im Bereich von 120 bis 140°C. Das vorstehend beschriebene Blend aus Co- und Terpolymeren hat einen Schmelzflussindex von 5 bis 9 g/10 min und einen Schmelzpunkt von 120 bis 150°C. Alle vorstehend angegebenen Schmelzflussindices werden bei 230°C und einer Kraft von 21,6 N (DIN 53 735) gemessen.

Die erste, innere Zwischenschicht. I enthält erfindungsgemäß 0,5 bis 8 Gew.-%, vorzugsweise 1 bis 5 Gew.-% an Antifog-Additiv, bezogen auf das Gewicht der Zwischenschicht. Die Menge an Anitifog-Additiv in der Zwischenschicht wird gleichzeitig so gewählt, daß die Gesamtmenge an Antifog-Additiv bezogen auf die Folie mindestens 0,4 bis <1 Gew.-%, vorzugsweise 0,6 - <1 Gew.-% beträgt. Diese Additivmenge wird erfindungsgemäss nur der inneren Zwischenschicht I zugesetzt.

Überraschenderweise ist es durch die spezielle Rezepturierung der Folie mit hohen Additivgehalten nur in der Zwischenschicht I möglich, verschiedene gewünschte Gebrauchseigenschaften der Folie nebeneinander zu realisieren. Die Folie zeigt die gewünschten Antifog-Eigenschaften, insbesondere sind diese überraschend gleichmäßig und langzeitbeständig. Die Zwischenschicht bildet ein Additivdepot, aus welchem das Additiv über lange Zeit nachmigrieren kann, so daß es auch nach mehreren Tagen zu keiner Tropfenbildung auf der Folien kommt, wenn diese zum Verpacken feuchter Lebensmittel verwendet wird. Gleichzeitig treten die nachteiligen Auswirkungen der Antifog-Additive auf Transparenz und Hot Tack überraschenderweise nicht auf. Die Folie zeigt trotz guter Antifog-Eigenschaften einen guten Hot Tack und eine sehr gute Transparenz.

Antifog-Additive sind im allgemeinen bivalente Verbindungen, die einen unpolaren aliphatischen Bereich zur Verankerung in der Polyolefinmatrix und einen polaren hydrophilen Bereich, der mit Wasser/wäßrigen Systemen wechselwirken kann. Dieser polare Bereich bewirkt die Unverträglichkeit von Antifog-Additiven mit Polypropylen, die zur Migration der Additve an die Folienoberfläche führt, wobei der polare Bereich nach Außen gerichtet ist und so mit Wasser wechselwirken kann. Das Antifog-Additv senkt den Kontaktwinkel und erlaubt so die Ausbildung eines kontinuierlichen transparenten Wasserfilms auf der Folienoberfläche.

Antifog-Additive sind somit oberflächenaktive Additive, die bevorzugt als Kombination aus verschiedenen Substanzklassen eingesetzt werden. Geeignete Substanzen die in Verbindung miteinander als Antifog-Additiv eingesetzt werden sind beispielsweise in der WO 97/22655 beschrieben auf welche hiermit ausdrücklich Bezug genommen wird. Bevorzugte Komponenten der Kombination sind Fettsäureester und deren Derivate, aliphatische Alkohole und deren Ester, mehrfach ethoxylierte aromatische Alkohole, ein oder mehrfache veresterte Sorbitol Ester, ein oder mehrfach veresterte Glycerolester, gemischte Glycerolester, ethoxylierte Sorbitanester, ethoxylierte Amine. Die vorstehend genannten Ester beruhen in der Regel auf einer Veresterung der jeweiligen Säure oder Alkohol Funktionen mit mittel oder langkettigen Fettsäuren.

In einer bevorzugten Ausführungsform enthält die Zwischenschicht I eine Wirkstoffkombination aus den drei Substanzklassen: Glycerolester, Sorbitolester und ethoxylierte Amine. Die Zwischenschicht I enthält in dieser Ausführungsform insgesamt 3-5 Gew.-% der Wirkstoffkombination aus den genannten verschiedenen Substanzklassen, jeweils bezogen auf das Gewicht der Zwischenschicht I.

Die Antifog-Additive können direkt oder über ein Konzentrat, ein sogenanntes Masterbatch in die Folie eingearbeitet werden. Derartige Masterbatche sind Polyolefine die die Antifog-Additive in einer gegenüber der Folienschicht erhöhten Konzentration enthalten, im allgemeinen 30 - 80Gew.-%, vorzugsweise 40 - 60 Gew.-% des Additivs, bezogen auf das Gesamtgewicht des Konzentrats. Die Polyolefine des Masterbatches sind im allgemeinen gängige Polyethylene oder Polypropylene wie sie für die Folie der vorliegenden Erfindung beschrieben sind.

Antifog-Additive und entsprechende Masterbatche sind an sich Stand der Technik und kommerziell erhältlich.

Die erfindungsgemässe Polypropylenfolie kann eine auf der zweiten Oberfläche der Basisschicht aufgebrachte zweite Zwischenschicht 11 aus Polymeren aus Olefinen mit 2 bis 10 Kohlenstoffatomen aufweisen.

Diese zweite Zwischenschicht II besteht bevorzugt zu 98 - 100 Gew.-% aus den für die Basisschicht beschriebenen Polypropylenrohstoffen, wobei das in der zweiten Zwischenschicht 11 eingesetzte Propylenhomopolymere mindestens >98 - 100 Gew.-% Propylen enthält und im allgemeinen einen Schmelzpunkt von 140 °C oder höher, vorzugsweise 150 bis 170 °C besitzt. Isotaktisches Homopolypropylen mit einem n-heptanlöslichen Anteil von 6 Gew.-% und weniger, bezogen auf das isotaktische Homopolypropylen, ist bevorzugt. Das Homopolymere hat im allgemeinen einen Schmelzflussindex von 1,5 g/10 min bis 20 g/10 min, vorzugsweise 2,0 g/10 min bis 15 g/10 min.

In einer weiteren Ausführungsform sind auch Abmischungen des Propylenhomopolymeren mit Propylenco- oder Terpolymeren möglich. Die in solchen Abmischungen einsetzbaren Co- und Terpolymeren sind bereits als Polymere für die innere Zwischenschicht I beschrieben worden. Mischungen für die Zwischenschicht II enthalten maximal 30 Gew.-%, vorzugsweise 1 bis 10 Gew.-%, bezogen auf die Zwischenschicht II der genannten Co-oder Terpolymeren.

Weiterhin enthalten beide Zwischenschichten I und II im allgemeinen zusätzlich die für die Basisschicht beschriebenen Stabilisatoren und Neutralisationsmittel in den entsprechenden auf das Gewicht der Zwischenschicht bezogenen Mengen. Gegebenenfalls kann die Zwischenschicht II zusätzlich übliche Gleitmittel und Antistatika enthalten. Jedoch werden der zweiten Zwischenschicht II keine Antifog-Additive zugefügt.

Die Dicke der Zwischenschichten I liegt im allgemeinen in einem Bereich von 0,2 bis 10 µm, vorzugsweise im Bereich von 0,4 bis 8 µm, insbesondere 1 bis 6 µm. Die Dicke der Zwischenschicht II liegt im allgemeinen im Bereich von 0,2 bis 15 µm, vorzugsweise 1-10 µm.

Die erfindungsgemässe Polypropylenfolie umfasst weiterhin eine auf der inneren Zwischenschicht I aufgebrachten Deckschicht, welche nachstehend als innere Deckschicht I bezeichnet wird. Sie ist bei Verwendung dem Packgut zugewandt. Gegebenenfalls gibt es zusätzlich eine zweite Deckschicht II, welche auf der gegenüberliegenden Seite, d.h auf der zweiten Oberfläche der Basis- oder Zwischenschicht II, angebracht ist.

Die innere Deckschicht I ist im allgemeinen aus Polymeren aus Olefinen mit 2 bis 10 Kohlenstoffatomen aufgebaut, vorzugsweise Propylenco- oder Terpolymere deren Propylengehalt mindestens 50 Gew.-%, vorzugsweise 70 - 98 Gew.-% beträgt. Im allgemeinen enthält die innere Deckschicht I 95 - 100 Gew.-%, vorzugsweise 98 - <100 Gew.-% der beschriebenen Propylenco- oder Terpolymeren.

Beispiele für derartige olefinische Polymere sind
ein Copolymer von
Ethylen und Propylen oder
Ethylen und Butylen-1 oder
Propylen und Butylen-1 oder
ein Terpolymer von
Ethylen und Propylen und Butylen-1 oder
ein Blend oder eine Mischung aus zwei oder mehreren der genannten Homo-, Co- und Terpolymeren,
wobei insbesondere statistische Ethylen-Propylen-Copolymere mit einem Ethylengehalt von 1 bis 10 Gew.-%, bevorzugt 2,5 bis 8 Gew.-%, oder statistische Propylen-Butylen-1-Copolymere mit einem Butylengehalt von 2 bis 25 Gew.-%, bevorzugt 4 bis 20 Gew.-%, jeweils bezogen auf das Gesamtgewicht des Copolymeren, oder
statistische Ethylen-Propylen-Butylen-1-Terpolymere mit einem Ethylengehalt von 1 bis 10 Gew.-%, bevorzugt 2 bis 6 Gew.-%, und einem Butylen-1-Gehalt von 2 bis 20 Gew.-%, bevorzugt 4 bis 20 Gew.-%, jeweils bezogen auf das Gesamtgewicht des Terpolymeren, oder
ein Blend aus einem Ethylen-Propylen-Butylen-1-Terpolymeren und einem Propylen-Butylen-1-Copolymeren mit einem Ethylengehalt von 0,1 bis 7 Gew.-% und einem Propylengehalt von 50 bis 90 Gew.-% und einem Butylen-1-Gehalt von 10 bis 40 Gew.-%, jeweils bezogen auf das Gesamtgewicht des Polymerblends, bevorzugt sind.

Die in der inneren Deckschicht I eingesetzten vorstehend beschriebenen Co- und Terpolymeren weisen im allgemeinen einen Schmelzflussindex von 1,5 bis 30 g/10 min, vorzugsweise von 3 bis 15 g/10 min, auf. Der Schmelzpunkt liegt im Bereich von 120 bis 140 °C. Das vorstehend beschriebene Blend aus Co- und Terpolymeren hat einen Schmelzflussindex von 5 bis 9 g/10 min und einen Schmelzpunkt von 120 bis 150 °C. Alle vorstehend angegebenen Schmelzflussindices werden bei 230°C und einer Kraft von 21,6 N (DIN 53 735) gemessen.

Die erfindungsgemässe Polypropylenfolie kann eine auf der Basis- oder der Zwischenschicht II aufgebrachte zweite Deckschicht II aus Propylenpolymeren aufweisen. Diese zweite Deckschicht II besteht (98 - 100 Gew.-%) gegebenenfalls aus den für die Deckschicht I beschriebenen Propylenco- oder Terpolymeren, oder aber aus den für die Basisschicht beschriebenen Propylenhomopolymeren, wobei das in der zweiten Deckschicht II eingesetzte Propylenhomopolymer zum überwiegenden Teil (>98 - 100 Gew.-%) aus Propylen besteht und im allgemeinen einen Schmelzpunkt von 140 °C oder höher, vorzugsweise 150 bis 170 °C besitzt, wobei isotaktisches Homopolypropylen mit einem n-heptanlöslichen Anteil von 6 Gew.-% und weniger, bezogen auf das isotaktische Homopolypropylen, bevorzugt ist. Das Homopolymere hat im allgemeinen einen Schmelzflussindex von 1,5 g/10 min bis 20 g/10 min, vorzugsweise 2,0 g/10 min bis 15 g/10 min.

Die geeigneten Propylenco- oder Terpolymer, welche mindestens 50 Gew.-% Propyleneinheiten enthalten sind vorstehend bereits für die Deckschicht I beschrieben. Diese sind ebenfalls für Deckschicht II besonders geeignet. Auch diese Ausführungsform kann auf der Oberfläche der Deckschicht II corona- oder flammbehandelt werden.

Zur Verbesserung der Bedruckbarkeit der Deckschicht II sind auch Abmischungen des vorstehend beschriebenen Propylenhomopolymeren mit Co- oder Terpolymeren einsetzbar. Die in solchen Mischungen in der zweiten Deckschicht II verwendeten Co- und Terpolymeren sind bereits für die innere Deckschicht I beschrieben worden. Im allgemeinen enthalten derartige Mischungen für die Deckschicht II 1 bis 30 Gew.-%, vorzugsweise 1 bis 20 Gew.-% der Co- oder Terpolymeren. Die zweite Deckschicht II werden im allgemeinen keine Antifog-Additive zugefügt.

Die Deckschichten I und II können die für die Basisschicht beschrieben Stabilisatoren und Neutralisationsmittel in den entsprechenden auf das Gewicht der entsprechenden Schicht bezogenen Mengen enthalten. In einer bevorzugten Ausführungsform enthalten die Deckschichten I und/oder II nachstehend beschriebene Antiblockmittel. Sowohl der ersten innere Deckschicht I als auch der zweiten Deckschicht II werden, wie der Basis und der zweiten Zwischenschicht II keine Antifog-Additive zugefügt. Die Antifog-Additive werden erfindungsgemäß nur der inneren Zwischenschicht I zugefügt, die als Additivdepot fungiert.

Es versteht sich von selbst, daß beispielsweise durch die übliche Verarbeitung von Folienregenerat in den übrigen Schichten der Folie geringfügige Mengen Antifog-Additiv enthalten sein können. Diese Menge muß jedoch so gering gehalten werden, daß keine störenden Mengen zur zweiten äußeren Oberfläche der Folie migrieren. Im allgemeinen sollte die Basisschicht über Folienregenerat weniger als 1 Gew.-% dieser Antifog-Additive enthalten. In einer derartigen Menge wirken sich die Antifog-Additive in der Basisschicht noch nicht nachteilig auf die gewünschten Folieneigenschaften aus.

Geeignete Antiblockmittel für die Deckschichten I und/oder II sind anorganische Zusatzstoffe wie Siliciumdioxid, Calciumcarbonat, Magnesiumsilicat, Aluminiumsilicat, Calciumphosphat und dergleichen und/oder unverträgliche organische Polymerisate wie Polyamide, Polyester, Polycarbonate und dergleichen, bevorzugt werden Benzoguanaminformaldehyd-Polymere, Siliciumdioxid und Calciumcarbonat. Die wirksame Menge an Antiblockmittel, vorzugsweise SiO2, liegt im Bereich von 0,1 bis 2 Gew.-%, vorzugsweise 0,1 bis 0,8 Gew.-%. Die mittlere Teilchengrösse liegt zwischen 1 und 6 µm, insbesondere 2 und 5 µm, wobei Teilchen mit einer kugelförmigen Gestalt, wie in der EP-A-0 236 945 und der DE-A-38 01 535 beschrieben, besonders geeignet sind.

Die Dicke der Deckschicht/en I und II ist im allgemeinen grösser als 0,2 µm und liegt vorzugsweise im Bereich von 0,4 bis 3 µm, insbesondere 0,5 bis 1,5 µm. Die Dicke der jeweiligen Deckschichten können unabhängig voneinander gewählt werden.

Die Gesamtdicke der erfindungsgemässen Polypropylenfolie kann innerhalb weiter Grenzen variieren und richtet sich nach dem beabsichtigten Einsatz. Sie beträgt vorzugsweise 4 bis 120 µm, insbesondere 5 bis 80 µm, vorzugsweise 7 bis 50 µm, wobei die Basisschicht etwa 40 bis 95 % der Gesamtfoliendicke ausmacht.

Die Erfindung betrifft weiterhin ein Verfahren zur Herstellung der erfindungsgemässen Polypropylenfolie nach dem an sich bekannten Coextrusionsverfahren.

Im Rahmen dieses Verfahrens wird zunächst wie beim Coextrusionsverfahren üblich das Polymere bzw. die Polymermischung der einzelnen Schichten in einem Extruder komprimiert und verflüssigt, wobei die gegebenenfalls zugesetzten Additive bereits im Polymer bzw. in der Polymermischung enthalten sein können oder als Masterbatch eingearbeitet werden. Die Schmelzen werden dann gleichzeitig durch eine Flachdüse (Breitschlitzdüse) gepresst, und die ausgepresste mehrschichtige Folie wird auf einer oder mehreren Abzugswalzen abgezogen, wobei sie abkühlt und sich verfestigt.

Die so erhaltene Folie wird dann längs und quer zur Extrusionsrichtung gestreckt, was zu einer Orientierung der Molekülketten führt. Das Längsstrecken wird man zweckmässigenrveise mit Hilfe zweier entsprechend dem angestrebten Streckverhältnis verschieden schnellaufender Walzen durchführen und das Querstrecken mit Hilfe eines entsprechenden Kluppenrahmens. Die Längsstreckungsverhältnisse liegen im Bereich von 4 bis 9, vorzugsweise 4,5 bis 8,5. Die Querstreckverhältnisse liegen im Bereich von 5 bis 10, vorzugsweise 6 bis 9.

An die biaxiale Streckung der Folie schliesst sich ihre Thermofixierung (Wärmebehandlung) an, wobei die Folie etwa 0,1 bis 20 s lang bei einer Temperatur von 60 bis 160 °C gehalten wird. Anschliessend wird die Folie in üblicher Weise mit einer Aufwickeleinrichtung aufgewickelt.

Es hat sich als besonders günstig erwiesen, die Abzugswalze oder -walzen, durch die die ausgepresste Folie abgekühlt und verfestigt wird, durch einen Heiz- und Kühlkreislauf bei einer Temperatur von 10 bis 100 °C, vorzugsweise 20 bis 70 °C, zu halten.

Die Temperaturen, bei denen Längs- und Querstreckung durchgeführt werden, können in einem relativ grossen Bereich variieren und richten sich nach den gewünschten Eigenschaften der Folie. Im allgemeinen wird die Längsstreckung vorzugsweise bei 80 bis 150 °C und die Querstreckung vorzugsweise bei 120 bis 180 °C durchgeführt.

Bevorzugt wird/werden nach der biaxialen Streckung eine oder beide Oberfläche/n der Folie nach einer der bekannten Methoden plasma, corona- oder flammbehandelt. Die Behandlungsintensität liegt im allgemeinen im Bereich von 36 bis 50 mN/m, vorzugsweise 38 bis 45 mN/m. Im Falle einer einseitigen Behandlung ist es möglich nur die innere Oberfläche der Folie zu behandeln.

In bevorzugten Ausführungsformen werden jedoch entweder beide Oberfläche der Folie oder die Oberfläche der Deckschicht II (d.h. die äußere Folienseite) behandelt. Es wurde ursprünglich erwartet, daß sich eine einseitige Coronabehandlung auf der Oberfläche der Deckschicht I (d.h. die innere Folienseite) besonders vorteilhaft auf die Folieneigenschaften auswirken würden, da man der Coronabehandlung eine migrationsfördemde Wirkung zuschreibt. Es wurde gefunden, daß diese unterstützende Wirkung überraschenderweise nicht notwendig ist. Die Antifog-Addtive migrieren auch bei beidseitiger Behandlung oder bei einer Behandlung auf der äußeren Folienseite zur "richtigen" inneren Folienoberfläche. Zusätzlich wurde gefunden, daß die einseitige Coronabehandlung auf der inneren Folienseite bei einzelnen Antifog-Kombinationen zu einer störenden Geschmacksbeeinträchtigung des verpackten Gutes führt. Somit ist die einseitig "innere" Coronabehandlung zwar möglich aber nicht notwendig und auch nicht immer vorteilhaft.

Bei der Coronabehandlung wird zweckmässigerweise so vorgegangen, dass die Folie zwischen zwei als Elektroden dienenden Leiterelementen hindurchgeführt wird, wobei zwischen den Elektroden eine so hohe Spannung, meist Wechselspannung (etwa 5 bis 20 kV und 5 bis 30 kHz), angelegt ist, dass Sprüh- oder Coronaentladungen stattfinden können. Durch die Sprüh- oder Coronaentladung wird die Luft oberhalb der Folienoberfläche ionisiert und reagiert mit den Molekülen der Folienoberfläche, so dass polare Einlagerungen in der im wesentlichen unpolaren Polymermatrix entstehen.

Die erfindungsgemässe Mehrschichtfolie zeichnet sich durch ihre hervorragende Eignung als Antifog-Folie für die Verpackung von Gütern mit hohem Feuchtegehalt aus. Es wurde gefunden, dass der mehrschichtige Aufbau in Verbindung mit der speziellen Rezepturierung der einzelnen Schichten die vorteilhafte Wirkung der an sich bekannten Antifog-Additive gewährleistet, wobei jedoch gleichzeitig deren nachteilige Wirkung, wie Eintrübung der Folie, schlechtere Bedruckbarkeit, verschlechterter Hot-Tack, vermieden wird.

Überraschenderweise genügt die ausschliessliche Rezepturierung der inneren Zwischenschicht I mit vergleichsweise hohen Konzentrationen an Antifog-Additven, um gleichbleibend gute Antifog-Eigenschaften der Folie zu erzielen. Die Zwischenschicht I fungiert als Additiv-Depot und erlaubt eine ausreichend schnelle, aber auch nachhaltige und gezielte Migration des Antifog-Additivs zur inneren Deckschicht I. Damit wird eine gleichbleibende und zeitlich konstant gute Antifog-Eigenschaft gewährleistet.

Es wurde gefunden, dass durch die erfindungsgemäße Zusammensetzung der Folie die Antifog-Additive die Trübung der Folie nicht merklich erhöhen. Dies ist für eine transparente Verpackungsfolie, die das Packgut optisch attraktiv zur Geltung bringen soll, unerläßlich.

Überraschenderweise werden durch hohe Additiv-Konzentrationen nur in der Zwischenschicht I bessere Ergebnisse hinsichtlich der Antifog-Eigenschaften erreicht, als durch die Kombination von Antifog-Additiven in der Basisschicht und der Deckschicht.

Überraschenderweise bildet die Basisschicht eine wirksame Barriere gegenüber einer Migration des Antifog-Additivs zur Oberfläche der Deckschicht II. Diese Sperrwirkung bleibt selbst bei einer Oberflächenbehandlung der Deckschicht II mittels Corona oder Flamme erhalten. Somit kann die Folie einseitig oder beidseitig oberflächenbehandelt werden, dennoch migriert das Antifog-Additiv nur zur Oberfläche der inneren Deckschicht I. Die äußere Obefläche kann nach Bedarf mit einer Bedruckung versehen werden. Zusätzlich zeigt die Folie besser Hot Tack-Eigenschaften als Anti-Fog-Folien nach dem Stand der Technik. Es wird somit eine Folie zur Verfügung gestellt, die eine besonders vorteilhafte Eigenschaftskombination aufweist. Die Folie hat Anti-Fog-Eigenschafteri, die besonders langzeit stabil und gleichmäßig sind und hat noch immer eine sehr gute Transparenz, gute Hot-Tack-Eigenschaften und ist in der gewünschten Weise auf der äußeren Seite II bedruckbar.

Die Erfindung wird durch die nachfolgenden Beispiele näher erläutert.

### Beispiel 1

Es wurde durch Coextrusion und anschließende stufenweise Orientierung in Längs- und Querrichtung eine transparente vierschichtige Folie bestehend aus der Basisschicht B, einer inneren Zwischenschicht Z1 einer inneren Deckschicht D1 und einer äußeren Deckschicht D2 mit einer Gesamtdicke von 30 µm hergestellt. Die äußere Deckschicht D 2 hatte eine Dicke von 0,7 µm, die innere Zwischenschicht Z 1 eine Dicke von 4µm und die innere Deckschicht D 1 eine Dicke von 1,0µm. Beide Deckschichten der Folie wurden coronabehandelt. Der Gesamtgehalt der Folie an Antifog-Additiven betrug 0,67 Gew.-%, bezogen auf das Gesamtgewicht der Folie. Die Schichten waren wie folgt zusammengesetzt:

### Basisschicht B:

- 99,84 Gew.-%: Propylenhomopolymer mit einem Schmelzpunkt von 165 °C und einem Schmelzflußindex von 3,4g/10min und einem Kettenisotaxie-Index von 94 %
- 0,03 Gew.-%: Neutralisationsmittel (CaCO3)
- 0,13 Gew.-%: Stabilisator (Irganox)

### innere Zwischenschicht I:

- 95,0 Gew.%: statistisches Copolymer aus Ethylen und Propylen mit einem Schmelzflußindex von 6,0g/10min und einem Ethylengehalt von 6 Gew.-% bezogen
auf das Copolymer
- 5,0 Gew.%: Antifog-Additiv-Kombination aus einem 1/3 - Sorbitanmonostearat 1/3 - Ethoxyliertes Sorbitanoleat 1/3 - Glycerindioleat

### Innere Deckschicht I:

- 99,5 Gew.-%: statistisches Copolymer aus Ethylen und Propylen mit einem Schmelzflußindex von 6,0g/10min und einem Ethylengehalt von 6 Gew.-% bezogen auf das Copolymer
- 0,5 Gew.-%: SiO2 als Antiblockmittel mit einer mittleren Teilchengröße von 4 µm

### Äußere Deckschicht II:

- 89,7 Gew.-%: Propylenhomopolymer mit einem Schmelzpunkt von 165 °C und einem Schmelzflußindex von 3,4g/10min und einem Kettenisotaxie-Index von 94 %, mit 0,03 Gew.-% Neutralisationsmittel (CaC03) und 0,13 Gew.% Stabilisator (Irganox)
- 10,0 Gew.-%: statistisches Copolymer aus Ethylen und Propylen mit einem Schmelzflußindex von 6,0g/10min und einem Ethylengehalt von 6 Gew.-% bezogen auf das Copolymer
- 0,3 Gew.-%: SiO2 als Antiblockmittel mit einer mittleren Teilchengröße von 4 µm

Die Herstellungsbedingungen in den einzelnen Verfahrensschritten waren:

| | | |
|---|---|---|
| Extrusion: | Temperaturen Basisschicht B: | 260°C |
| | Zwischenschicht 21: | 250°C |
| | Deckschicht D1: | 250°C |
| | Deckschicht D2: | 250°C |
| | Temperatur der Abzugswalze: | 20°C |
| Längsstreckung: | Temperatur: | 110°C |
| | Längsstreckverhältnis: | 1 : 5 |
| Querstreckung: | Temperatur: | 165°C |
| | Querstreckverhältnis: | 1 : 9 |
| Fixierung: | Temperatur: | 140°C |
| | Konvergenz: | 10 % |
| Druckvorbehandlung | Deckschicht I und II | Corona 10000V / 10000Hz |

Bei dem Querstreckverhältnis von 1:9 handelt es sich um einen Effektivwert. Dieser Effektivwert berechnet sich aus der Endfolienbreite B, reduziert um die zweifache Säumstreifenbreite b, dividiert durch die Breite der längsgestreckten Folie C, ebenfalls um die zweifache Säumstreifenbreite b reduziert.

Die Folie ließ sich ohne Probleme herstellen und zeichnete sich durch herausragende Eigenschaften aus:
- sehr gute Bedruckbarkeit auf der äußeren Oberfläche und
- gute hot tack Eigenschaften und
- sehr gute Antifog-Eigenschaften

### Beispiel 2

Analog zu Beispiel 1 wurde eine transparente fünfschichtige mit einer zusätzlichen äußeren Zwischenschicht II hergestellt. Diese zweite Zwischenschicht II befand sich zwischen der Basisschicht B und der äußeren Deckschicht II und bestand aus einem Propylenhomopolymer mit einem Schmelzpunkt von 165 °C und einem Schmelzflußindex von 3,4g/10min und einem Kettenisotaxie-Index von 94 %.

Die Gesamtdicke der Folie betrug 30µm. Die äußere Deckschicht I hatte eine Dicke von 0,7 µm, die äußere Zwischenschicht 11 eine Dicke von 2 µm, die innere Zwischenschicht I eine Dicke von 4µm und die innere Deckschicht I eine Dicke von 1,0µm. Der Gesamtgehalt der Folie an Antifog-Additiven betrug 0,67 Gew.-%, bezogen auf das Gesamtgewicht der Folie.

### Beispiel 3

Wie in Beispiel 2 wurde eine transparente fünfschichtige Folie hergestellt. Im Unterschied zu Beispiel 2 wurde das Copolymer in der inneren Zwischenschicht I und der inneren Deckschicht I durch ein statistisches Ethylen-Propylen-Butylen-Terpolymer ersetzt. Das statistische Ethylen-Propylen-Butylen-Terpolymer besitzt einen Ethylengehalt von 3 Gew.-% und einen Butylengehalt von 7 Gew.-% (Rest Propylen) und war mit je 0,07 % Irganox 1010 und Irgafos 168 sowie 0,03% DHT stabilisiert. Der Schmelzflußindex beträgt 7,3 g/10min. Der Gesamtgehalt der Folie an Antifog-Additiven betrug 0,67 Gew.-%, bezogen auf das Gesamtgewicht der Folie. Dadurch konnten die Hot tack Eigenschaften der Folie zusätzlich verbessert werden.

### Beispiel 4

Wie in Beispiel 3 wurde eine transparente fünfschichtige Folie hergestellt. Im Unterschied zu Beispiel 3 wurden der äußeren Zwischenschicht II 20% eines statistisches Copolymer aus Ethylen und Propylen mit einem Schmelzflußindex von 6,0g/10min und einem Ethylengehalt von 6 Gew.-% bezogen auf das Copolymer zugemischt. Der Gehalt an Propylenhomopolymer wurde entsprechend reduziert. Der Gesamtgehalt der Folie an Antifog-Additven betrug 0,67 Gew.-%, bezogen auf das Gesamtgewicht der Folie. Trotz der Zumischung an Copolymer in der äußeren Zwischenschicht II blieben die Antifog-Eigenschaften der Folie konstant gut.

### Beispiel 5

Wie in Beispiel 4 wurde eine transparente fünfschichtige Folie hergestellt. Im Unterschied zu Beispiel 3 wurden die Konzentration an Antifog-Additiven in der inneren Zwischenschicht 1 von 5 Gew.% auf 3 Gew.% reduziert. Der Gesamtgehalt der Folie an Antifog-Additiven betrug jetzt nur noch 0,40 Gew.-%, bezogen auf das Gesamtgewicht der Folie.
Trotz der Reduktion der Antifogkonzentration in der Zwischenschicht I wurde eine Folie mit guten Antifog-Eigenschaften hergestellt.

### Vergleichsbeispiel 1:

Wie in Beispiel 1 beschrieben wurde durch Coextrusion und anschließende stufenweise Orientierung in Längs- und Querrichtung eine transparente vierschichtige Folie. In Unterschied zu Beispiel 1 wurde je 1 Gew.% des gleiche Antifog-Additivs in die Basisschicht B und die innere Zwischenschicht I und die innere Deckschicht I eingearbeitet. Dadurch erhöht sich der Gesamtgehalt an Antifog-Additven auf 0,98 Gew.%, bezogen auf das Gesamtgewicht der Folie. Außerdem wurde nur die innere Deckschicht I coronabehandelt. Die Schichten waren wie folgt zusammengesetzt:

### Basisschicht B:

- 98,84 Gew.-%: Propylenhomopolymer mit einem Schmelzpunkt von 165 °C und einem Schmelzflußindex von 3,4g/10min und einem Kettenisotaxie-Index von 94 %
- 0,03 Gew.-%: Neutralisationsmittel (CaCO3)
- 0,13 Gew.-%: Stabilisator (Irganox)
- 1,0 Gew.%: Antifog-Additiv wie in Beispiel 1

### innere Zwischenschicht I:

- 99,0 Gew.%: Propylenhomopolymer mit einem Schmelzpunkt von 165 °C und einem Schmelzflußindex von 3,4g/10min und einem Kettenisotaxie Index von 94 %, mit 0,03 Gew.-% Neutralisationsmittel (CaCO3) und 0,13 Gew.-% Stabilisator (Irganox)
- 1,0 Gew.%: Antifog-Additiv wie in Beispiel 1

### Innere Deckschicht I:

- 98,5 Gew.-%: statistisches Copolymer aus Ethylen und Propylen mit einem Schmelzflußindex von 6,0g/10min und einem Ethylengehalt von 6 Gew.-% bezogen auf das Copolymer
- 0,5 Gew.-%: SiO2 als Antiblockmittel mit einer mittleren Teilchengröße von 4 µm
- 1,0 Gew.%: Antifog-Additiv wie in Beispiel 1

### Äußere Deckschicht II:

- 99,7 Gew.-%: Propylenhomopolymer mit einem Schmelzpunkt von 165 °C und einem Schmelzflußindex von 3,4g/10min und einem Kettenisotaxie-Index von 94 %, mit 0,03 Gew.-% Neutralisationsmittel (CaCO3) und 0,13 Gew.-% Stabilisator (Irganox)
- 0,3 Gew.-%: SiO2 als Antiblockmittel mit einer mittleren Teilchengröße von 4 µm

Trotz Erhöhung der Konzentration an Antifog-Additven wurde eine Folie mit deutlich schlechteren Antifog- und Hot tack-Eigenschaften erhalten, die zudem auf Grund der fehlenden Coronabehandlung auf der äußeren Seite nicht bedruckbar war.

### Vergleichsbeispiel 2:

Analog zu Beispiel 2 wurde eine transparente fünfschichtige Folie. In Unterschied zu Beispiel 2 wurde je 1 Gew.% Antifog-Additive in die Basisschicht B, die innere Zwischenschicht I und die innere Deckschicht I eingearbeitet. In der inneren Zwischenschicht I wurde zudem das statistische Coplymer durch ein Propylenhomopolymer ersetzt, um die Migration der Antifog-Additve zur inneren Deckschicht I zusätzlich zu fördern

Dadurch erhöht sich der Gesamtgehalt an Antifog-Additven auf 0,98 Gew.%, bezogen auf das Gesamtgewicht der Folie. Die Folie ist beidseitig coronabehandelt. Die Zusammensetzung der inneren Zwischenschicht I und der äußeren Deckschicht II waren wie folgt:

### innere Zwischenschicht I:

- 99,0 Gew.%: Propylenhomopolymer mit einem Schmelzpunkt von 165 °C und einem Schmelzflußindex von 3,4g/10min und einem Kettenisotaxie Index von 94 %, mit 0,03 Gew.-% Neutralisationsmittel (CaC03) und 0,13 Gew.-% Stabilisator (Irganox)
- 1,0 Gew.%: Antifog-Additiv-Kombination wie in Beispiel 1

### Äußere Deckschicht II:

- 99,7 Gew.-%: Propylenhomopolymer mit einem Schmelzpunkt von 165 °C und einem Schmelzflußindex von 3,4g/10min und einem Kettenisotaxie-Index von 94 %, mit 0,03 Gew.-% Neutralisationsmittel (CaCO3) und 0,13 Gew.-% Stabilisator (Irganox)
- 0,3 Gew.-%: SiO2 als Antiblockmittel mit einer mittleren Teilchengröße von 4 µm

Trotz Erhöhung der Konzentration an Antifog-Additven wurde eine Folie mit deutlich schlechteren Antifog- und Hot tack-Eigenschaften erhalten, auch die Bedruckbarkeit wird herabgesetzt.

### Vergleichsbeispiel 3:

Es wurde eine Folie wie in Beispiel 3 beschrieben hergestellt. Im Unterschied zu Beispiel 3 wurde je 1 Gew.% Antifog-Additive in die innere Zwischenschicht I und die innere Deckschicht I eingearbeitet. Dadurch verringert sich der Gesamtgehalt an Antifog-Additv auf 0,17 Gew. %, bezogen auf das Gesamtgewicht der Folie.

Auf Grund der geringen Antifog-Konzentration weist die Folie deutliche Mängel hinsichtlich der Antifog-Eigenschaften, und den Hot-Tacks auf.

In der folgenden Tabelle sind die wichtigsten Foleineigenschaften der Beispiele und Vergleichsbeispiele dargestellt:

| Beispiele | Antifog-Eigenschaften | | Bedruckbarkeit | Hot tack bei 140°C[mm] |
|---|---|---|---|---|
| | Hot fog Test | Cold fog Test | | Deckschicht I gegen Deckschicht I |
| | | | | |
| 01 | +++ | +++ | +++ | ++ |
| | | | | |
| 02 | +++ | +++ | +++ | ++ |
| | | | | |
| 03 | +++ | +++ | +++ | +++ |
| | | | | |
| 04 | +++ | +++ | +++ | +++ |
| | | | | |
| 05 | ++ | +++ | +++ | +++ |
| | | | | |
| V 01 | ++ | ++ | - | + |
| | | | | |
| V 02 | + | ++ | ++ | + |
| | | | | |
| V 03 | - | + | +++ | + |
| | | | | |

### Beurteilungskriterien:

+++ sehr gut
++ gut
+ schlecht
- sehr schlecht

Zur Charakterisierung der Rohstoffe und der Folien wurden die folgenden Messmethoden benutzt:

### Bedruckbarkeit:

Die coronabehandelten Folien wurden 14 Tage nach ihrer Produktion (Kurzzeitbeurteilung) bzw. 6 Monate nach ihrer Produktion (Langzeitbeurteilung) bedruckt. Die Farbhaftung wurde mittels Klebebandtest beurteilt. Konnte mittels Klebeband wenig Farbe abgelöst werden, so wurde die Farbhaftung mit mässig und bei deutlicher Farbablösung mit schlecht beurteilt.

### Antifog-Eigenschaften:

Die Antifog-Eigenschaften der Folie wurden mittels Colg-fog Test und Hot-fog Test bestimmt.

### "Cold-fog" Test:

Ein 250ml Becherglas wird mit 200ml Wasser gefüllt und mit der Antifogfolie so abgedeckt, dass die innere Deckschicht I oder Folie dem Wasser zugewandt ist. Das Becherglas wird in einem Klimaschrank bei konstant 4°C gelagert. Die Antifogfolie wird in bestimmten Zeitintervallen (5min, 10min, 20min, 30min, 1 h, 2h, 3h, 4h, 1 d, 2d, 3d, 4d und 5d) bezüglich ihrer Antifogwirkung, d.h. der Vermeidung der tropfenförmigen Kondenswasserbüdung , beurteilt.

### Beurteilungskriterien:

| | |
|---|---|
| +++ sehr gut | Folie transparent, keinerlei Tropfenbildung |
| ++ gut | Folie transparent, uneinheitlicher Wasserfilm |
| + schlecht | schlechte Durchsicht durch große Tropfen |
| - sehr schlecht | keine Durchsicht durch viele kleine Tropfen |

### "Hot-fog" Test:

Ein 250ml Becherglas wird mit 50ml Wasser gefüllt und mit der Antifogfolie so abgedeckt, dass die innere Deckschicht I der Folie dem Wasser zugewandt ist. Das Becherglas wird in einem Wasserbad bei konstant 60°C gelagert. Die Antifogfolie wird in bestimmten Zeitintervallen (1min, 2min, 5min, 10min, 20min, 30min, 1 h, 2h, 3h und 4h) bezüglich ihrer Antifogwirkung, d.h. der Vermeidung der Kondenswasserbildung , beurteilt. Beurteilungskriterien sind analog zu dem Cold-fog Test.

### Hot Tack

Mit dem Hot tack bezeichnet man die Festigkeit einer Heißsiegelnaht direkt nach dem Siegelvorgang, also noch im heiß/warmen Zustand (Warmnahtfestigkeit). Dazu wird eine 40mm breiter und 600mm langer Folienstreifen mit Hilfe eines Spatels zwischen den Siegelbacken eines Heißsiegelgerätes durchgeführt und festgehalten, ohne dass die Siegelbacken berührt werden. Der Folienstreifen wird am anderen Ende mit einem 200g Belastungsgewicht beschwert. Die Siegelung erfolgt i.d.R. bei 130-150°C, mit 30N/cm² Siegeldruck und einer Siegelzeit von 0,5s. Wenn sich die Siegelbacken schließen, wird der Spatel sofort entfernt, so dass die Siegelnaht sofort nach dem Öffnen der Siegelbacken in einem 180° Winkel mit dem Belastungsgewicht beschwert wird, um so die Siegelnahtfestigkeit besser überprüfen zu können. Gemessen werden die mm, die die Siegelnaht aufgezogen wird.

### Schmelzflussindex

Der Schmelzflussindex wurde nach DIN 53 735 bei 21,6 N Belastung und 230 °C gemessen.

### Schmelzpunkt:

DSC-Messung, Maximum der Schmelzkurve, Aufheizgeschwindigkeit 20 DEG C/min.

### Trübung:

Die Trübung der Folie wurde nach ASTM-D 1003-52 gemessen.

### Glanz:

Der Glanz wurde nach DIN 67 530 bestimmt. Gemessen wurde der Reflektorwert als optische Kenngrösse für die Oberfläche einer Folie. Angelehnt an die Normen ASTM-D 523-78 und ISO 2813 wurde der Einstrahlwinkel mit 60 DEG oder 85 DEG eingestellt. Ein Lichtstrahl trifft unter dem eingestellten Einstrahlwinkel auf die ebene Prüffläche und wird von dieser reflektiert bzw. gestreut. Die auf den photoelektronischen Empfänger auffallenden Lichtstrahlen werden als proportionale elektrische Grösse angezeigt. Der Messwert ist dimensionslos und muss mit dem Einstrahlwinkel angegeben werden.

### Oberflächenspannung:

Die Oberflächenspannung wurde mittels der sogenannten Tintenmethode (DIN 53 364) bestimmt.

## Patentansprüche

1. Biaxial orientierte Polypropylen-Mehrschichtfolie, welche mindestens eine Basisschicht B, eine Zwischenschicht I und eine Deckschicht I umfasst und welche Antifog Additive enthält, **dadurch gekennzeichnet, dass** die Antifog-Additive nur der Zwischenschicht I in einer Menge von 0,5 bis 8 Gew.-%, bezogen auf das Gewicht der Zwischenschicht zugefügt wird und die Folie maximal 0,5 bis < 1 Gew.-% Antifog-Additive, bezogen auf das Gesamtgewicht der Folie, enthält und wobei die Basisschicht mindestens 90Gew.-% eines Propylenpolymeren enthält und die Zwischenschicht I 92 - 99,5 Gew.-% Propylencopolymer und/oder Propylenterpolymer enthält.

2. Polypropylen-Mehrschichtfolie gemäss Anspruch 1, **dadurch gekennzeichnet, dass** die Basisschicht mindestens 90 Gew.-% eines Propylenhomopolymeren enthält, welche zu >98-100Gew.-% bezogen auf das Polypropylen aus Propyleneinheiten aufgebaut ist und dieser Basisschicht im wesentlichen kein Antifog-Additiv zugefügt ist.

3. Polypropylen-Mehrschichtfolie gemäss Anspruch 1 und/oder 2, **dadurch gekennzeichnet, dass** die Propylencopolymeren und/oder Propylenterpolymeren der Zwischenschichten I zu 70 bis 99 Gew.-% aus Propyleneinheiten aufgebaut sind.

4. Polypropylen-Mehrschichtfolie gemäss einem oder mehreren der Ansprüche 1 bis 3, **dadurch gekennzeichnet, dass** das Antifog-Additiv aus mindestens zwei Komponenten besteht, welche aus den folgenden Substanzklassen ausgewählt sind: Fettsäureester, aliphatische Alkohole, ethoxylierte aromatische Alkohole, ein- oder mehrfach veresterte Sorbitolester, ein- oder mehrfach veresterte Glycerolester, ethoxylierte Sorbitanester, ethoxylierte Amine.

5. Polypropylen-Mehrschichtfolie gemäss einem oder mehreren der Ansprüche 1 bis 4, **dadurch gekennzeichnet, dass** das Anitfog-Additiv aus mindestens 3 Komponenten besteht

6. Polypropylen-Mehrschichtfolie gemäss einem oder mehreren der Ansprüche 1 bis 5, **dadurch gekennzeichnet, dass** das Antifog-Additiv aus einer Mischung von Glycerolestern und Sorbitalestern und ethoxylierten Aminen besteht.

7. Polypropylen-Mehrschichtfolie gemäss einem oder mehreren der Ansprüche 1 bis 6, **dadurch gekennzeichnet, dass** die Folie eine zweite Zwischenschicht II auf der gegenüberliegenden Seite der Basisschicht aufweist, welche 98 - 100 Gew.- eines Propylenhomopolymeren mit einem Propylengehalt von >98 - 100 Gew.-% enthält.

8. Polypropylen-Mehrschichtfolie gemäss einem oder mehreren der Ansprüche 1 bis 6, **dadurch gekennzeichnet, dass** die Folie eine zweite Zwischenschicht II auf der gegenüberliegenden Seite der Basisschicht aufweist, welche maximal 70 Gew.-% eines Propylenhomopolymeren mit einem Propylengehalt von >98 - 100 Gew.-% und höchstens 30 Gew.-% eines Propylencopolymeren und/oder Propylenterpolymeren enthält.

9. Polypropylen-Mehrschichtfolie gemäss einem oder mehreren der Ansprüche 1 bis 8, **dadurch gekennzeichnet, dass** Deckschicht I 95 - 100 Gew.-% eines Propylenco- und/oder eines Propylenterpolymeren mit einem Propylengehalt von 70 bis 98 Gew.-% enthält.

10. Polypropylen-Mehrschichtfolie gemäss einem oder mehreren der Ansprüche 1 bis 8, **dadurch gekennzeichnet, dass** die Folie eine zweite Deckschicht II aufweist, welche 98 bis 100 Gew.-% eines Propylenhomopolymeren mit einem Propylengehalt von >98 - 100 Gew.-% oder 98 - 100 Gew.-% eines Propylenco- oder Terpolymeren enthält.

11. Polypropylen-Mehrschichtfolie gemäss einem oder mehreren der Ansprüche 1 bis 8, **dadurch gekennzeichnet, dass** die Folie eine zweite Deckschicht II aufweist, welche maximal 70 Gew.-% eines Propylenhomopolymeren mit einem Propylengehalt von >98 - 100 Gew.-% und höchstens 30 Gew.-% eines Propylenco- und/oder Propylenterpolymeren enthält.

12. Polypropylen-Mehrschichtfolie gemäss einem der Ansprüche 10 oder 11, **dadurch gekennzeichnet, dass** die Folie auf der Oberfläche der zweiten Deckschicht II bedruckt ist.

13. Verfahren zur Herstellung einer Poiypropylen-Mehrschichtfolie gemäss einem oder mehreren der Ansprüche 1 bis 12, **dadurch gekennzeichnet, dass** die Folie auf beiden Seiten mittels Corona oder Flamme oder Plasma behandelt wird.

14. Verfahren zur Herstellung einer Polypropylen-Mehrschichtfolie gemäss einem oder mehreren der Ansprüche 1 bis 12, **dadurch gekennzeichnet, dass** die Folie auf der äußeren Seite, d.h. auf der Oberfläche der Deckschicht II mittels Corona oder Flamme oder Plasma behandelt wird.

15. Verwendung einer Potypropylen-Mehrschichtfolie gemäss einem oder mehreren der Ansprüche 1 bis 13, als Verpackungsfolie zur Verpackung von Gütern mit einem hohem Wassergehalt, **dadurch gekennzeichnet, dass** die Deckschicht I dem Packgut zugewandt wird.

16. Verwendung nach Anspruch 15, **dadurch gekennzeichnet, daß** das Packgut Salat, Obst oder Gemüse sind.

17. Verwendung einer Polypropyten-Mehrschichttolie gemäss einem oder mehreren der Ansprüche 1 bis 13, als Antibeschlagfolie für Windschutzscheiben, Helmvisiere oder Glasscheiben, **dadurch gekennzeichnet daß** auf der Oberfläche der Deckschicht II ein transparenter Kleber oder Haftvermittler aufgebracht ist.

## Claims

1. A biaxially oriented multilayer polypropylene film, which comprises at least one base layer B, an interlayer I and a top layer I, and which contains anti-fog additives, **characterized in that** the anti-fog additives are only added to the interlayer I in an amount of from 0.5 to 8 weight percent, in relation to the weight of the interlayer, and the film contains a maximum of from 0.5 to less than 1 weight percent of anti-fog additives, in relation to the total weight of the film, and wherein the base layer contains at least 90 weight percent of a polypropylene polymer and the interlayer I contains 92 to 99.5 weight percent propylene copolymer and/or propylene terpolymer.

2. The multilayer polypropylene film according to claim 1, **characterized in that** the base layer contains at least 90 weight percent of a propylene homopolymer, which is built up from greater than 98 to 100 weight percent, in relation to the polypropylene, of propylene units and this base layer has substantially no anti-fog additive added thereto.

3. The multilayer polypropylene film according to claim 1 and/or 2, **characterized in that** the propylene copolymers and/or propylene terpolymers of the interlayers I are built up from 70 to 99 weight percent of propylene units.

4. The multilayer polypropylene film according to one or more of claims 1 to 3, **characterized in that** the anti-fog additive consists of at least two components selected from the following substance classes: fatty acid esters, aliphatic alcohols, ethoxylated aromatic alcohols, mono- or polyesterified sorbitol esters, mono- or polyesterified glycerol esters, ethoxylated sorbitan esters and ethoxylated amines.

5. The multilayer polypropylene film according to one or more of claims 1 to 4, **characterized in that** the anti-fog additive consists of at least three components.

6. The multilayer polypropylene film according to one or more of claims 1 to 5, **characterized in that** the anti-fog additive consists of a mixture of glycerol esters and sorbitol esters and ethoxylated amines.

7. The multilayer polypropylene film according to one or more of claims 1 to 6, **characterized in that** the film has a second interlayer II on the opposite side of the base layer, which comprises 98 to 100 weight percent of a propylene homopolymer having a propylene content of greater than 98 to 100 weight percent.

8. The multilayer polypropylene film according to one or more of claims 1 to 6, **characterized in that** the film has a second interlayer II on the opposite side of the base layer, which comprises a maximum of 70 weight percent of a propylene homopolymer having a propylene content of greater than 98 to 100 weight percent and at most 30 weight percent of a propylene copolymer and/or propylene terpolymer.

9. The multilayer polypropylene film according to one or more of claims 1 to 8, **characterized in that** the top layer I comprises 95 to 100 weight percent of a propylene copolymer and/or of a propylene terpolymer having a propylene content of from 70 to 98 weight percent.

10. The multilayer polypropylene film according to one or more of claims 1 to 8, **characterized in that** the film has a second interlayer II, which comprises 98 to 100 weight percent of a propylene homopolymer having a propylene content of greater than 98 to 100 weight percent or of 98 to 100 weight percent of a propylene copolymer or propylene terpolymer.

11. The multilayer polypropylene film according to one or more of claims 1 to 8, **characterized in that** the film has a second interlayer II, which comprises a maximum of 70 weight percent of a propylene homopolymer having a propylene content of greater than 98 to 100 weight percent and at most 30 weight percent of a propylene copolymer and/or propylene terpolymer.

12. The multilayer polypropylene film according to one of claims 10 or 11, **characterized in that** the film is printed on the surface of the second top layer II.

13. A process for producing a multilayer polypropylene film according to one or more of claims 1 to 12, **characterized in that** the film is treated on both sides by means of corona or flame or plasma.

14. The process for producing a multilayer polypropylene film according to one or more of claims 1 to 12, **characterized in that** the film is treated on the outer surface, i.e. on the surface of the top layer II, by means of corona or flame or plasma.

15. Use of a multilayer polypropylene film according to one or more of claims 1 to 13 as packaging film for the packaging of goods having a high water content, **characterized in that** the top layer I faces the packaged goods.

16. The use according to claim 15, **characterized in that** the packaged goods are salad, fruit or vegetables.

17. Use of a multilayer polypropylene film according to one or more of claims 1 to 13 as antifogging film for windshields, helmet visors or glass panes, **characterized in that** a transparent adhesive or adhesion promoter is applied to the surface of the top layer II.

## Revendications

1. Film en polypropylène multicouches à orientation biaxiale, comprenant au moins une couche de base B, une couche intermédiaire I et une couche de protection I et contenant des additifs antibuée, **caractérisé en ce qu'**on ajoute les additifs antibuée uniquement de la couche intermédiaire I dans une quantité de 0,5 à 8 % en poids par rapport au poids de la couche intermédiaire et **en ce que** le film contient au maximum de 0,5 à < 1 % en poids d'additifs antibuée, par rapport au poids total du film et la couche de base contenant au moins 90 % en poids d'un polymère de propylène et la couche intermédiaire I contenant de 92 à 99,5 % d'un copolymère de propylène et/ou d'un terpolymère de propylène.

2. Film en polypropylène multicouches selon la revendication 1, **caractérisé en ce que** la couche de base contient au moins 90 % en poids d'un homopolymère de propylène, qui à > 98 à 100 % en poids par rapport au polypropylène est constitué d'unités de polypropylène et **en ce que** sensiblement aucun additif antibuée n'est ajouté à ladite couche de base.

3. Film en polypropylène multicouches selon la revendication 1 et/ou 2, **caractérisé en ce que** les copolymères de polypropylène et/ou les terpolymères de polypropylène des couches intermédiaires I sont constitués à de 70 à 99 % en poids d'unités de propylène.

4. Film en polypropylène multicouches selon l'une quelconque ou plusieurs des revendications 1 à 3, **caractérisé en ce que** l'additif antibuée consiste en au moins deux composants, qui sont choisis parmi les substances suivantes : esters d'acide gras, alcools aliphatiques, alcools aromatiques éthoxylés, esters de sorbitol estérifiés une ou plusieurs fois, esters de glycérol estérifiés une ou plusieurs fois, esters de sorbitane éthoxylés, amines éthoxylés.

5. Film en polypropylène multicouches selon l'une quelconque ou plusieurs des revendications 1 à 4, **caractérisé en ce que** l'additif antibuée consiste en au moins 3 composants.

6. Film en polypropylène multicouches selon l'une quelconque ou plusieurs des revendications 1 à 5, **caractérisé en ce que** l'additif antibuée consiste en un mélange d'esters de glycérol et d'esters de sorbitol et d'amines éthoxylés.

7. Film en polypropylène multicouches selon l'une quelconque ou plusieurs des revendications 1 à 6, **caractérisé en ce que** sur la face opposée à la couche de base, le film comporte une deuxième couche intermédiaire II qui contient de 98 à 100 % en poids d'un homopolymère de propylène avec une teneur en propylène de > 98 à 100 % en poids.

8. Film en polypropylène multicouches selon l'une quelconque ou plusieurs des revendications 1 à 6, **caractérisé en ce que** sur la face opposée de la couche de base, le film comporte une deuxième couche intermédiaire II qui contient au maximum 70 % en poids d'un homopolymère de propylène avec une teneur en propylène de > 98 à 100 % en poids et au maximum 30 % en poids d'un copolymère de propylène et/ou d'un terpolymère de propylène.

9. Film en polypropylène multicouches selon l'une quelconque ou plusieurs des revendications 1 à 8, **caractérisé en ce que** la couche de protection I contient de 95 à 100 % en poids d'un copolymère et/ou d'un terpolymère de propylène avec une teneur en propylène de 70 à 98 % en poids.

10. Film en polypropylène multicouches selon l'une quelconque ou plusieurs des revendications 1 à 8, **caractérisé en ce que** le film comporte une deuxième couche de protection II qui contient de 98 à 100 % en poids d'un homopolymère de propylène avec une teneur en propylène de > 98 à 100 % en poids ou de 98 à 100 % en poids d'un copolymère ou d'un terpolymère de propylène.

11. Film en polypropylène multicouches selon l'une quelconque ou plusieurs des revendications 1 à 8, **caractérisé en ce que** le film comporte une deuxième couche de protection II contenant au maximum 70 % en poids d'un homopolymère de propylène avec une teneur en propylène de > 98 à 100 % en poids et au maximum 30 % en poids d'un copolymère et/ou d'un terpolymère de propylène.

12. Film en polypropylène multicouches selon l'une quelconque ou plusieurs des revendications 10 ou 11, **caractérisé en ce que** le film est imprimé sur la surface de la deuxième couche de protection II.

13. Procédé de fabrication d'un film en polypropylène multicouches selon l'une quelconque ou plusieurs des revendications 1 à 12, **caractérisé en ce qu'**on traite le film sur ses deux faces à la corona ou à la flamme ou au plasma.

14. Procédé de fabrication d'un film en polypropylène multicouches selon l'une quelconque ou plusieurs des revendications 1 à 12, **caractérisé en ce qu'**on traite le film sur sa face extérieure, c'est-à-dire sur la surface de la couche de protection II à la corona ou à la flamme ou au plasma.

15. Utilisation d'un film en polypropylène multicouches selon l'une quelconque ou plusieurs des revendications 1 à 13 en tant que film d'emballage pour emballer des produits à haute teneur en eau, **caractérisée en ce que** la couche de protection I est dirigée vers le produit à emballer.

16. Utilisation selon la revendication 15, **caractérisée en ce que** les produits à emballer sont de la salade, des fruits ou des légumes.

17. Utilisation d'une film en polypropylène multicouches selon l'une quelconque ou plusieurs des revendications 1 à 13 en tant que film antibuée pour des pare-brise, des visières de casque ou des vitres, **caractérisée en ce qu'**une colle transparente ou un agent adhésif transparent est appliqué sur la surface de la couche de protection II.
